(19) Europäisches Patentamt
European Patent Office
Office européen des brevets

(11) Publication number: **0 182 946**
**B1**

(12) # EUROPEAN PATENT SPECIFICATION

(45) Date of publication of patent specification: **15.03.89**

(51) Int. Cl.$^4$: **G 11 B 7/24** // C09B23/02

(21) Application number: **84308263.7**

(22) Date of filing: **28.11.84**

(54) **Optical recording medium.**

(43) Date of publication of application:
**04.06.86 Bulletin 86/23**

(45) Publication of the grant of the patent:
**15.03.89 Bulletin 89/11**

(84) Designated Contracting States:
**DE FR GB NL**

(56) References cited:
**EP-A-0 147 083**
**EP-A-0 174 383**
**PATENTS ABSTRACTS OF JAPAN, vol. 8, no. 12 (M-269)1449r, 19th January 1984; & JP - A - 58 175 693 (RICOH K.K.) 14-10-1983**
**PATENTS ABSTRACTS OF JAPAN, vol. 8, no. 160(M-312)1597r, 25th July 1984; & JP - A - 59 55795 (TKD K.K.) 30-03-1984**
**PATENTS ABSTRACTS OF JAPAN, vol. 8, no. 160 (M-312)1597r, 25th July 1984; & JP - A - 59 55794 (TDK K.K.) 30-03-1984**

(73) Proprietor: **TDK CORPORATION**
**13-1, Nihonbashi 1-chome**
**Chuo-ku Tokyo 103 (JP)**

(72) Inventor: **Namba, Kenryo**
**4-6-12 Shimomaruko**
**Ohta-ku Tokyo (JP)**
Inventor: **Asami, Shigeru**
**8-38-6 Oojima**
**Koto-ku Tokyo (JP)**
Inventor: **Aoi, Toshiki**
**5-16-19 Oojidai**
**Sakura-shi Chiba-ken (JP)**
Inventor: **Takahashi, Kazuo**
**502 Nakano-dai**
**Noda-shi Chiba-ken (JP)**
Inventor: **Kuroiwa, Akihiko**
**6-18-1-1218 Minami-Ooi**
**Shinagawa-ku Tokyo (JP)**

(74) Representative: **Rees, David Christopher et al**
**Kilburn & Strode 30 John Street**
**London WC1N 2DD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to an optical recording medium, and more particularly to an optical recording medium of heat mode.

An optical recording medium by nature does not involve any contact between the medium and a writing or reading head and, therefore, is characterized by the fact that the recording medium is not deteriorated by friction. This salient feature has encouraged the launching of various research on the development of optical recording media of all sorts.

In all these optical recording media, the optical recording medium of heat mode is attracting special attention of increasing reseach owing to the advantage that it has use for the processing of picture image in a dark room, for example.

An optical recording medium of heat mode utilises its recording light in the form of heat. A typical optical recording medium of heat mode is so constructed that recording of information is effected by melting and removing portions of the medium with the recording light such as laser beam to incise therein tiny holes called "bits" in patterns denoting letters, figures, etc. which make up the information and, on the other hand, reading of the recording information is effected by detecting these bits with the reading light.

As typical known photorecording media of the class resorting to such formation of bits, there may be cited the medium which has a recording layer of light-absorbing dye formed on a substrate and effects the formation of bits by melting the dye, the medium which has a recording layer containing such as autoxidizable resin as nitrocellulose and a light-absorbing dye and effects the formation of bits by decomposing the nitrocellulose, and the medium which has a recording medium formed of a thermoplastic resin and a light-absorbing dye and effects the formation of bits bý melting the resin and the dye.

In this connection, various dyes including cyanine dyes have been known as light-absorbiung dyes.

The recording layers formed by using various dyes including cyanine dyes, however, have a disadvantage that they do not suit actual use because of heavy deterioration by reading, namely the phenomenon that the repeated exposure of these layers to the reading light at the time of reading of recorded information deprives the dyes of their colours and degrades the S/N ration of reading.

Attention is drawn to EP—A—0147083 and EP—A—0174383 under EPC Article 54, paragraph 3.

JP—A—5955794 and JP—A—5955795 disclose optical recording media having recording layers formed from a carboxycyanate colouring matter and a singlet oxygen quencher such as a transition metal chelate.

A major object of this invention is to provide an optical recording medium possessing a dye-containing recording layer improved to curb the deterioration by reading.

According to the present invention an optical recording medium has superposed on a substrate a recording layer containing at least one dye or a dye and a resin and further containing, as a quencher, a compound represented by the following general formula I or a salt thereof,

General formula 1

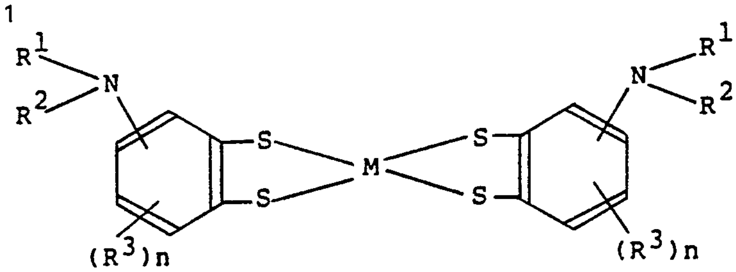

wherein $R^1$ and $R^2$ each stand for a substituted or unsubstituted alkyl group having 1 to 8 carbon atoms or aryl group having 6 to 10 carbon atoms, $R^3$ stands for an alkyl group having 1 to 4 carbon atoms, a halogen atom or

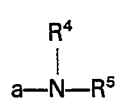 group

(wherein $R^4$ and $R^5$ each stand for a substituted or unsubstituted alkyl group having 1 to 8 carbon atoms or aryl group having 6 to 10 carbon atoms), n stands for an integer of the value of 1 to 3, and M stands for a transition metal atom.

Incidentally, in the 47th Soring Annual Meeting (April 3, 1983), 3T49, of Japan Chemical Society, a report was published to the effect that, of the compounds of the aforementioned general formula I, that which has $R^1 = R^2 = CH_3$ and $n = 0$ is useful as a near infrared absorbing dye. When a recording layer is formed of this particular compound as a light absorbing dye, the recording medium incorporating this recording layer has a low S/N ratio of reading because the recording layer has low sensitivity and particularly low reflectance.

By contrast, when this compound is used in combination with a separate dye and allowed to function as a quencher in accordance with the present invention, there can be realized a stable medium which has high sensitivity and a high S/N ratio.

Preferably $R^1$ and $R^2$ each stand for an alkyl group and preferably the

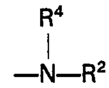

group is bound at the 3-position of the benzene ring. A preferred embodiment provided that $R^3$ stands for an alkyl group or a

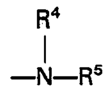

group, and preferably $R^4$ and $R^5$ each stand for an alkyl group.

Conveniently n stands for 1 and preferably $R^3$ is bound at the 4-position of the benzene ring.

M may be selected from Ni, Co, Cu, Pd and Pt. The cation may be a metal ion, mm ammonium ion or a quaternary ammonium ion.

Preferably the dye is a cyanine dye and more preferably is a compound represented by the following general formula II.

$$\phi - L = \psi\,(X^-)m \qquad \text{(II)}$$

wherein φ and ψ each stand for an indole ring, a thiazole ring, and oxazole ring, a selenazole ring, an imidazole ring or a pyridine ring which may have condensed therewith an aromatic ring, L stands for a linking group for the formation of a mono-, di-, tri- or tetra-carbocyanine dye, $X^-$ stands for an anion, and m stands for 0 or 1. Preferably φ and ψ each stand for an indole ring which may have an indole ring condensed therewith. The dye may be contained in the recording layer in the form of a monomer, polymer, or linked with resin.

Other preferred features can be found within the specification.

The invention may be put into practice in various ways and a number of embodiments will now be described by way of example with reference to the accompanying examples.

The recording layer of the optical recording medium of the present invention contains a dye.

This invention does not discriminate the dye usable therefor by its type. Any of the dyes of cyanine type, phthalocyanine type, naphthalocyanine type, squalirium type, tetradehydrocorrin or corrole type, anthraquinone type, azo type, triphenyl methane type and pyrylium or thiapyrylium salt type or any other suitable type can be used.

In the dyes of these types, those of the cyanine type are paticularly effective as used for the purpose of this invention.

In the dyes of the cyanine type, those represented by the following formula II are used particularly advantageously.

Formula II

$$\phi - L = \psi\,(X^-)m$$

In the aforementioned formula II. φ and ψ each stand for an indole ring, thiazole ring, an oxazole ring, a selenazole ring, an imidazole ring or pyridine ring which may have condensed therewith an aromatic ring such as, for example, a benzene ring, a naphthalene ring, a phenanthrene ring or quinoxaline ring.

Although the symbols φ and ψ may denote different rings from each other, they generally denote the same aromatic group. These groups may have a varying substituent bonded thereto. The nitrogen atom in the ring denoted by ψ possesses a plus charge and the nitrogen atom in the ring denoted by φ is neutral.

The rings of φ and ψ are each desired to have a skeleton ring selected from the skeleton rings represented by the following formulas, φ I to φ XVI.

In the following formulas, the structures are expressed in the form of,

[Φ I]

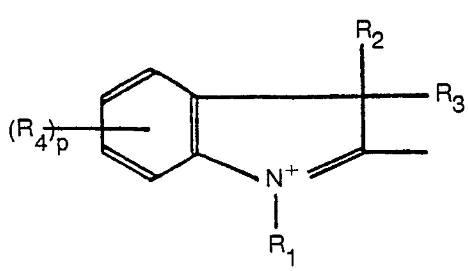

[Φ II]

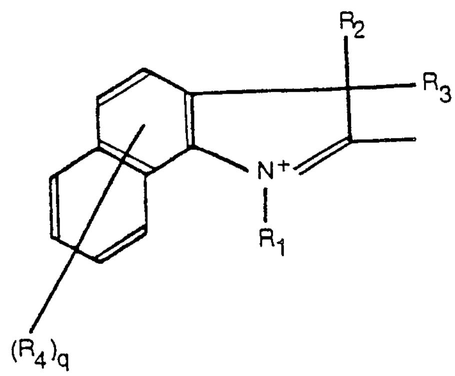

[Φ III]

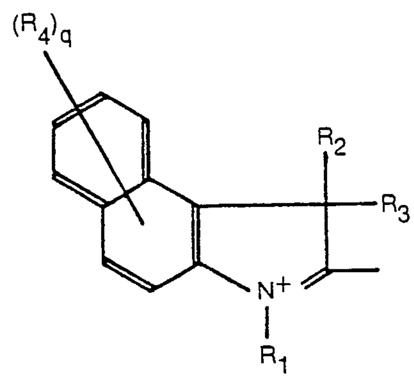

[Φ IV]

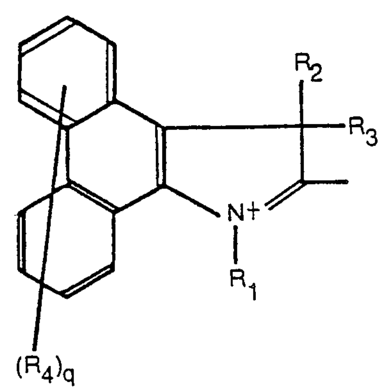

[Φ V]

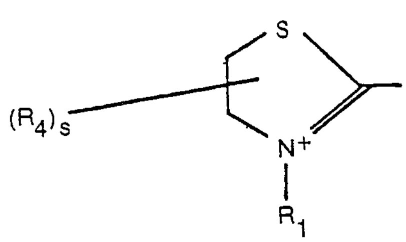

[Φ VI]

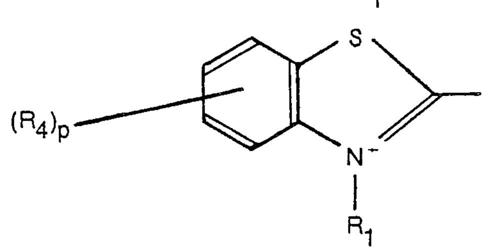

[Φ VII]

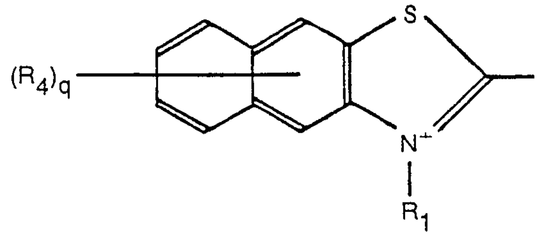

[Φ VIII]

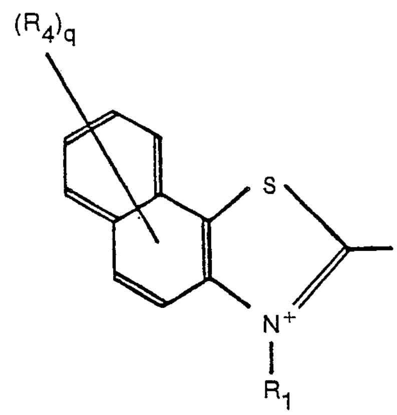

[Φ IX]

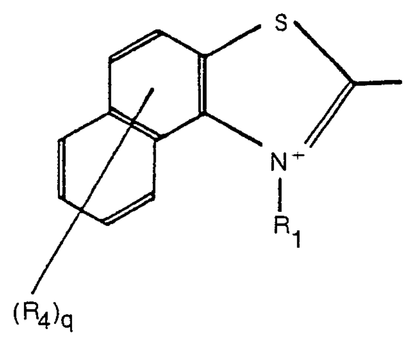

[Φ X]

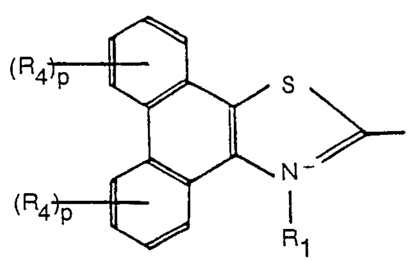

[Φ XI]

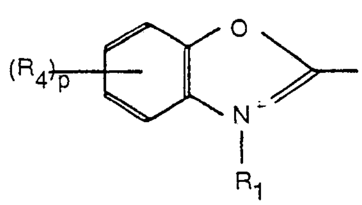

[Φ XII]

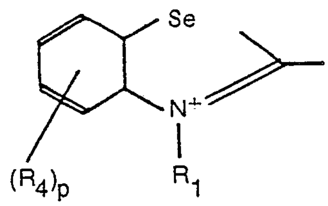

[Φ XIII]

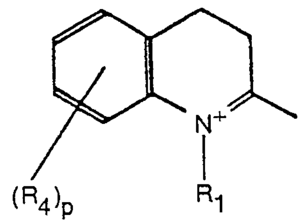

[Φ XIV]

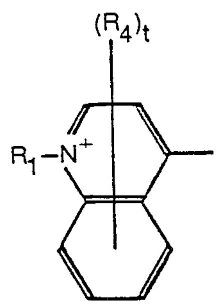

[Φ XV]

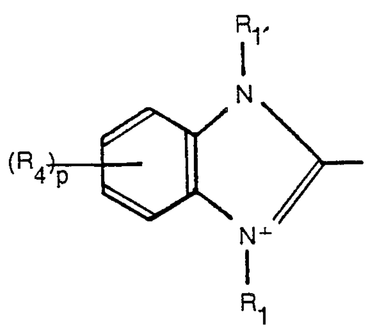

[Φ XVI]

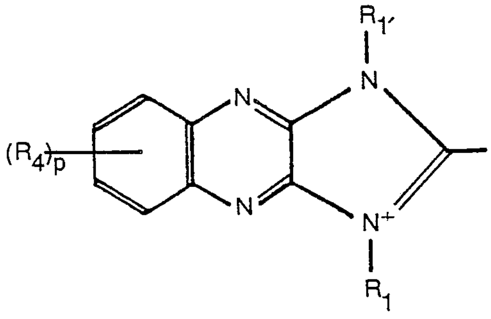

In each of the rings of the various types enumerated above, the group $R_1$ ($R_1$, $R_1'$) bonded to the nitrogen atom in the ring (each of the two nitrogen atoms in the imidazole ring) is a substituted or unsubstituted alkyl group or aryl group.

The numbers of carbon atoms of the groups $R_1$, $R_1'$ bonded to the nitrogen atom in the ring are not specifically limited. When this group contains a substituent, this substituent may be sulfonate group, alkyl-carbonyloxy group, alkyl-amide group, alkyl-sulfonamide group, alkoxycarbonyl group, alkyl-amino group, alkyl-carbamoyl group, alkylsulfamoyl group, hydroxyl group or halogen atom.

When the symbol m to be described afterwards is 0, the group $R_1$ bonded to the nitrogen atom in the ring $\phi$ is a substituted alkyl group or aryl group and possesses a minus charge.

When the rings $\phi$ and $\psi$ are each a condensed or non-condensed indole ring (formulas $\phi$ I to $\psi$ IV), two substituents $R_2$ and $R_3$ are desired to be bonded to the 3 position thereof. In that case, the two substituents $R_2$ and $R_3$ bonded to the 3 position are each desired to be an alkyl group or aryl group. In the various alkyl groups and aryl groups, the unsubstituted alkyl group having 1 or two carbon atoms, preferably 1 carbon atom, proves particularly desirable.

On the other hand, the rings represented by $\phi$ and $\psi$ each may have yet another substituent $R_4$ bonded to a prescribed position in the ring. Examples of the substituent so bonded include alkyl group, aryl group, heterocyclic residue, halgoen atom, alkoxy group, aryloxy group, alkylthio group, aryl-thio group, alkylcarbonyl group, arylcarbonyl group, alkyl-oxycarbonyl group, aryloxycarbonyl group, alkyl-carbonyloxy group, aryl-carbonyloxy group, alkyl-amide group, aryl-amide group, alkyl-carbamoyl group, arylcarbamoyl group, alkyl-amino group, aryl-amino group, carboxyl group, alkyl-sulfonyl group, aryl-sulfonyl group, alkyl-sulfonamide group, aryl-sulfonamide group, alkyl-sulfamoyl group, aryl-sulfamoyl group, cyano group and nitrogroup.

The numbers (p, q, r, s and t) of these substituents are generally 0 or about 1 to 4. When, p, q, r, s and t are each 2 or more, the plurality of $R_4$'s may denote mutually different substituents.

In the various rings enumerated above, the condensed or non-condensed indole rings selected from those of the formulas $\phi$ to $\psi$ IV prove desirable. This is because these rings enable the produced recording medium to excel in film-applying property and stability, exhibit extremely high reflectance, and possess a very high S/N ratio of reading.

L stands for a linking group for the formation of mono-, di-, tri- or tetra-carbocyanine dye. This linking group is desired to be selected from the linking groups represented by the following formulas L I to L VIII.

Formula L I

[L I]

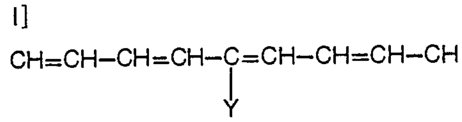

[L II]

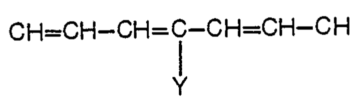

[L III]

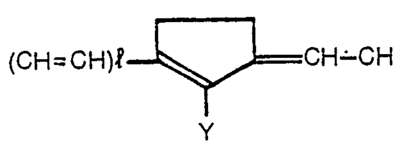

[L IV]

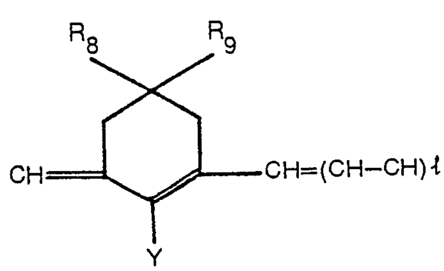

[L V]

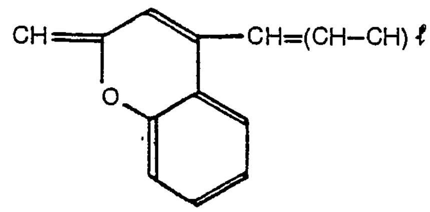

[L VI]

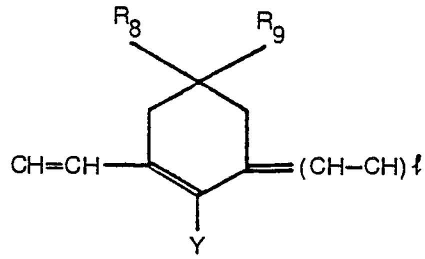

[L VII]

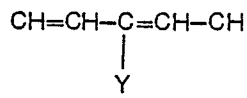

[L VIII]

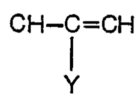

In the formulas given above, Y stands for a hydrogen atom or a monovalent group. Examples of the monovalent group advantageously used herein include lower alkyl groups having 1 to 4 carbon atoms such as methyl group, lower alkoxy groups having 1 to 4 carbon atoms such as methoxy group, di-substituted amino groups such as dimethyl-amino group, diphenylamino group, methylphenylamino group, morpholino group, imidazolidine group, and ethoxycarbonyl-piperazine group, alkylcarbonyloxy groups such as acetoxy group, alkylthio groups such as methylthio group, cyano group, and halogen atoms such as Br and Cl.

$R_8$ and $R_9$ each stand for a hydrogen atom or a lower alkyl having 1 to 4 carbon atoms such as methyl group.

And l stands for 0 or 1.

In the linking groups of the formulas L I to L VIII, the tricarbocyanine linking groups, particularly those of the formulas L II, L III, L IV and L V, prove particularly desirable.

$X^-$ stands for an anion. Examples of the anion which proves desirable include

$I^-$, $Br^-$, $ClO_4^-$, $BF_4^-$, 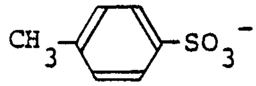 and 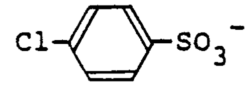.

Then, m stands for 0 or 1. When m is 0, $R_1$ of the ring φ possesses a minus charge and forms an innermolecular salt.

Now, concrete examples of the dye for use in the present invention will be cited below. However, this invention is not limited to such dyes.

| Dye No | Φ, Ψ | $R_1$, $R_1'$ | $R_2$, $R_3$ | $R_4$ | L | Y | l | X |
|---|---|---|---|---|---|---|---|---|
| D1 | (ΦI) | $CH_3$ | $CH_3$ | — | (LII) | H | | I |
| D2 | (ΦI) | $CH_3$ | $CH_3$ | — | (LII) | H | | $ClO_4$ |
| D3 | (ΦI) | $CH_2H_4OH$ | $CH_3$ | — | (LIII) | H | 1 | Br |
| D4 | (ΦI) | { $(CH_2)_3SO_3^-$<br>{ $(CH_2)_3SO_3^-Na^+$ | $CH_3$ | — | (LII) | H | | — |
| D5 | (ΦII) | $CH_3$ | $CH_3$ | — | (LII) | H | | $ClO_4$ |
| D6 | (ΦIII) | { $(CH_2)_3SO_3^-$<br>{ $(CH_2)_3SO_3^-Na^+$ | $CH_3$ | — | (LII) | H | | — |
| D7 | (ΦIII) | $CH_2CH_2OH$ | $CH_3$ | — | (LII) | H | | $ClO_4$ |
| D8 | (ΦIII) | $(CH_2)_2OCOCH_3$ | $CH_3$ | — | (LII) | H | | Br |
| D9 | (ΦIII) | $(CH_2)_2OCOCH_3$ | $CH_3$ | — | (LIII) | $-N(C_6H_5)_2$ | 1 | $ClO_4$ |
| D10 | (ΦIII) | $CH_3$ | $CH_3$ | — | (LII) | H | | $ClO_4$ |
| D11 | (ΦIII) | $CH_3$ | $CH_3$ | — | (LIII) | $-N(C_6H_5)_2$ | 1 | $ClO_4$ |
| D12 | (ΦI) | $CH_{18}H_{37}$ | $CH_3$ | — | (LII) | H | | I |
| D13 | (ΦI) | $CH_4H_9$ | $CH_3$ | — | (LII) | H | | $ClO_4$ |
| D14 | (ΦI) | $C_8H_{16}OCOCH_5$ | $CH_3$ | — | (LIII) | $-N(C_6H_5)_2$ | 1 | $ClO_4$ |
| D15 | (ΦI) | $CH_7H_{14}CH_2OH$ | $CH_3$ | — | (LII) | H | | I |

| Dye No | Φ, Ψ | $R_1$, $R_1'$ | $R_2$, $R_3$ | $R_4$ | L | Y | l | X |
|---|---|---|---|---|---|---|---|---|
| D16 | (ΦII) | $C_8H_{17}$ | $CH_3$ | — | (LII) | H | | $ClO_4$ |
| D17 | (ΦIII) | $C_8H_{17}$ | $CH_3$ | — | (LII) | H | | $ClO_4$ |
| D18 | (ΦIII) | { $C_7H_{14}COO^-$<br>$C_7H_{14}COOH$ | $CH_3$ | — | (LIII) | 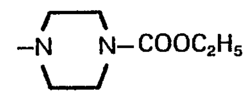 | 1 | — |
| D19 | (ΦIII) | $C_7H_{14}COOC_2H_5$ | $CH_3$ | — | (LII) | H | | $BF_4$ |
| D20 | (ΦIII) | $C_4H_9$ | $CH_3$ | — | (LIII) | $—N(C_6H_5)_2$ | 1 | $ClO_4$ |
| D21 | (ΦIII) | $C_{18}H_{37}$ | $CH_3$ | — | (LII) | H | | $ClO_4$ |
| D22 | (ΦIII) | $C_4H_9$ | $CH_3$ | — | (LII) | H | | $ClO_4$ |
| D23 | (ΦI) | $C_{17}H_{34}COOCH_3$ | $CH_3$ | — | (LII) | H | | I |
| D24 | (ΦI) | $C_8H_{16}OCOCH_3$ | $CH_3$ | — | (LIII) | $—N(C_6H_5)_2$ | 1 | I |
| D25 | (ΦI) | $C_8H_{17}$ | $C_2H_5$ | — | (LII) | H | | I |
| D26 | (ΦI) | $C_7H_{15}$ | $C_2H_5$ | — | (LII) | H | | I |
| D27 | (ΦII) | $CH_{17}H_{34}COOCH_3$ | $CH_3$ | — | (LII) | H | | $ClO_4$ |
| D28 | (ΦII) | $C_8H_{16}CH_2OCOCH_3$ | $CH_3$ | — | (LIII) | 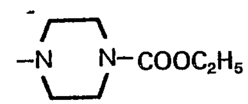 | 1 | I |
| D29 | (ΦII) | $CH_{17}H_{35}$ | $CH_3$ | — | (LIV) | 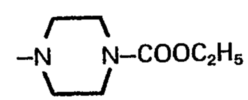 | 1 | $ClO_4$ |

| Dye No | Φ, Ψ | $R_1$, $R_1'$ | $R_2$, $R_3$ | $R_4$ | L | Y | l | X |
|---|---|---|---|---|---|---|---|---|
| D30 | (ΦII) | $C_7H_{14}COOCH_3$ | $C_2H_5$ | — | (LII) | H | | $ClO_4$ |
| D31 | (ΦIII) | $C_7H_{14}CH_2OH$ | $CH_3$ | — | (LII) | H | | $ClO_4$ |
| D32 | (ΦIII) | $C_7H_{14}CH_2OCOC_2H_5$ | $CH_3$ | — | (LII) | H | | I |
| D33 | (ΦIII) | $C_{17}H_{34}COOC_2H_5$ | $CH_3$ | — | (LIII) | $—N(C_6H_5)_2$ | 1 | I |
| D34 | (ΦIII) | $C_{17}H_{35}$ | $CH_3$ | — | (LIV) | H | 1 | I |
| D35 | (ΦIII) | $C_7H_{15}$ | $C_2H_5$ | — | (LII) | H | | I |
| D36 | (ΦIV) | $CH_3$ | $CH_3$ | — | (LII) | H | | I |
| D37 | (ΦIV) | $CH_3$ | $CH_3$ | — | (LII) | H | | $ClO_4$ |
| D38 | (ΦIV) | $C_4H_9$ | $CH_3$ | — | (LII) | H | | $ClO_4$ |
| D39 | (ΦIV) | $(CH_2)_2OCOCH_3$ | $CH_3$ | — | (LII) | H | | I |
| D40 | (ΦV) | $C_2H_5$ | — | 4-$CH_3$ | (LII) | H | | I |
| D41 | (ΦV) | $CH_3$ | — | 4-$CH_3$ | (LII) | H | | I |
| D42 | (ΦVI) | $C_2H_5$ | — | — | (LII) | H | | Br |
| D43 | (ΦVI) | $C_2H_5$ | — | 5-Cl | (LIII) | $—N(C_6H_5)_2$ | 1 | Br |
| D44 | (ΦVI) | $C_2H_5$ | — | 5-$OCH_3$ | (LII) | H | | $CH_3C_6H_4SO_3$ |
| D45 | (ΦVI) | $C_2H_5$ | — | 5-$OCH_3$ | (LH) | H | | Br |

| Dye No | Φ, Ψ | $R_1$, $R_1'$ | $R_2$, $R_3$ | $R_4$ | L | Y | l | X |
|---|---|---|---|---|---|---|---|---|
| D46 | (ΦVI) | $C_2H_5$ | — | — | (LIV) | — | | Br |
| D47 | (ΦVI) | $C_2H_5$ | — | — | (LII) | H | | Br |
| D48 | (ΦVI) | $C_2H_5$ | — | — | (LI) | H | | Br |
| D49 | (ΦVI) | $C_2H_5$ | — | — | (LII) | $CH_3$ | | Br |
| D50 | (ΦVI) | $C_2H_5$ | — | — | (LV) | H | 1 | Br |
| D51 | (ΦVI) | $C_2H_5$ | — | — | (LV) | H | 1 | Br |
| D52 | (ΦVI) | $C_2H_5$ | — | — | (LVI) | — | 1 | Br |
| D53 | (ΦVII) | $(CH_2)_3OCOCH_3$ | — | — | (LIII) | $-N(C_6H_5)_2$ | 1 | $CH_3C_6H_4SO_3$ |
| D54 | (ΦVI) | $CH_2CH_2OH$ | — | 5-Cl | (LII) | H | | $CH_3C_6H_4SO_3$ |
| D55 | (ΦVIII) | $C_2H_5$ | — | — | (LII) | H | | Br |
| D56 | (ΦIX) | $C_2H_5$ | — | — | (LII) | H | | Br |
| D57 | (ΦIX) | $C_2H_5$ | — | — | (LIII) | 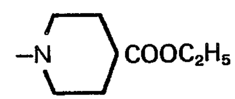 | 1 | $ClO_4$ |
| D58 | (ΦIX) | $C_2H_5$ | — | — | (LIII) | $OCH_3$ | 1 | I |
| D59 | (ΦX) | $C_2H_5$ | — | — | (LII) | H | | I |
| D60 | (ΦXI) | $CH_2CH_2OH$ | — | — | (LII) | H | | Br |

| Dye No | Φ, Ψ | $R_1$, $R_1'$ | $R_2$, $R_3$ | $R_4$ | L | Y | l | X |
|---|---|---|---|---|---|---|---|---|
| D61 | (ΦXII) | $C_2H_5$ | — | — | (LII) | H | | I |
| D62 | (ΦXII) | $(CH_2)_3OCOCH_2$ | — | — | (LII) | 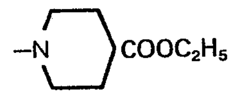 | | $ClO_4$ |
| D63 | (ΦXIII) | $C_2H_5$ | — | — | (LII) | H | | I |
| D64 | (ΦXIII) | $CH_2CH_2CH_2SO_3H$ | — | — | (LIII) | $—N(C_6H_5)_2$ | 1 | $ClO_4$ |
| D65 | (ΦXIII) | $C_2H_5$ | — | — | (LIII) | $—N(C_6H_5)_2$ | 1 | I |
| D66 | (ΦXIV) | $C_2H_5$ | — | — | (LII) | H | | Br |
| D67 | (ΦXV) | $C_2H_5$ | — | — | (LII) | H | | Br |
| D68 | (ΦVI) | $C_8H_{17}$ | — | 4-$CH_3$ | (LII) | H | | I |
| D69 | (ΦVI) | $C_8H_{37}$ | — | — | (LIII) | $—N(C_6H_5)_2$ | I | Br |
| D70 | (ΦVI) | $C_8H_{17}$ | — | — | (LII) | H | | $ClO_4$ |
| D71 | (ΦVI) | $C_8H_{17}$ | — | 5-Cl | (LIII) | $—N(C_6H_5)_2$ | 1 | $ClO_4$ |
| D72 | (ΦVI) | $C_{18}H_{37}$ | — | 5-Cl | (LII) | H | | I |
| D73 | (ΦVI) | $C_8H_{17}$ | — | { 5-$OCH_3$ 6-$OCH_3$ | (LII) | H | | I |
| D74 | (ΦVI) | $C_8H_{17}$ | — | 5-$OCH_3$ | (LIV) | — | 1 | I |
| D75 | (ΦVI) | $C_8H_{17}$ | — | 5-Cl | (LIII) | $—N(C_6H_5)_2$ | 1 | Br |

| Dye No | Φ, Ψ | $R_1$, $R_1'$ | $R_2$, $R_3$ | $R_4$ | L | Y | l | X |
|---|---|---|---|---|---|---|---|---|
| D76 | (ΦVI) | $C_{18}H_{37}$ | — | 5-Cl | (LIII) | $-N(C_6H_5)_2$ | 1 | Br |
| D77 | (ΦVI) | $C_8H_{17}$ | — | — | (LII) | 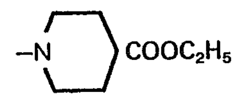 | | I |
| D78 | (ΦVI) | $C_8H_{17}$ | — | — | (LII) | H | | I |
| D79 | (ΦVI) | $C_{18}H_{17}$ | — | 5-Cl | (LII) | H | | $CH_3C_6H_4SO_3$ |
| D80 | (ΦVI) | $C_{18}H_{37}$ | — | 5-Cl | (LII) | H | | $ClC_6H_4SO_3$ |
| D81 | (ΦVI) | $C_8H_{17}$ | — | — | (LV) | H | 1 | I |
| D82 | (ΦVI) | $C_8H_{17}$ | — | — | (LVI) | H | 1 | Br |
| D83 | (ΦVI) | $C_8H_{17}$ | — | — | (LVII) | — | | I |
| D84 | (ΦVII) | $C_8H_{17}$ | — | — | (LIII) | $-N(C_6H_5)_2$ | 1 | Br |
| D85 | (ΦVII) | $C_{18}H_{37}$ | — | — | (LII) | H | | $CH_3C_6H_4SO_3$ |
| D86 | (ΦVII) | $C_{13}H_{27}$ | — | — | (LII) | H | | Br |
| D87 | (ΦVII) | $C_{13}H_{27}$ | — | — | (LII) | H | | Br |
| D88 | (ΦVII) | $C_8H_{17}$ | — | — | (LIII) | 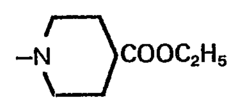 | 1 | $ClO_4$ |
| D89 | (ΦVII) | $C_8H_{17}$ | — | — | (LIII) | $OCH_3$ | 1 | I |
| D90 | (ΦVII) | $C_{18}H_{37}$ | — | — | (LII) | H | | $CH_3C_6H_4SO_3$ |

| Dye No | Φ, Ψ | $R_1$, $R_1'$ | $R_2$, $R_3$ | $R_4$ | L | Y | l | X |
|---|---|---|---|---|---|---|---|---|
| D91 | (ΦVII) | $C_8H_{17}$ | — | — | (LII) | H | | $CH_3C_6H_4SO_3$ |
| D92 | (ΦVII) | $C_{18}H_{37}$ | — | — | (LIII) | —$N(C_6H_5)_2$ | 1 | $CH_3C_6H_4SO_3$ |
| D93 | (ΦXI) | $C_8H_{17}$ | — | — | (LII) | H | | Br |
| D94 | (ΦVII) | $C_8H_{17}$ | — | — | (LII) | H | | I |
| D95 | (ΦXII) | $C_8H_{17}$ | — | — | (LIII) | 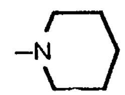 $COOC_2H_5$ | 1 | $ClO_4$ |
| D96 | (ΦXII) | $C_{13}H_{27}$ | — | 5-Cl | (LII) | H | | I |
| D97 | (ΦXII) | $C_8H_{17}$ | — | — | (LIII) | —$N(C_6H_5)_2$ | 1 | Br |
| D98 | (ΦXII) | $C_{18}H_{37}$ | — | — | (LIII) | —$N(C_6H_5)_2$ | 1 | Br |
| D99 | (ΦXIV) | $C_8H_{17}$ | — | — | (LII) | H | | Br |
| D100 | (ΦXV) | $C_8H_{17}$ | — | — | (LII) | H | | Br |
| D101 | (ΦV) | $C_8H_{17}$ | — | — | (LII) | H | | Br |
| D102 | (ΦVIII) | $C_8H_{17}$ | — | — | (LII) | H | | Br |
| D103 | (ΦXIII) | $C_8H_{17}$ | — | — | (LII) | H | | Br |
| D104 | (ΦI) | $CH_2CH_2OCOCH_3$ | $CH_3$ | — | (LII) | H | | $ClO_4$ |
| D105 | (ΦI) | $CH_2CH_2OH$ | $CH_3$ | — | (LII) | H | | Br |
| D106 | (ΦIII) | $CH_3$ | $CH_3$ | — | (LVI) | Br | 1 | $ClO_4$ |

| Dye No | Φ, Ψ | $R_1$, $R_1'$ | $R_2$, $R_3$ | $R_4$ | L | Y | l | X |
|---|---|---|---|---|---|---|---|---|
| D107 | (ΦI) | $C_2H_5$ | $CH_3$ | 5-$C_6H_5SO_2$ | (LVI) | Br | 1 | I |
| D108 | (ΦI) | $C_2H_5$ | $CH_3$ | 5-$C_6H_5SO_2$ | (LIII) | Cl | 1 | $ClO_4$ |
| D109 | (ΦI) | $C_2H_5$ | $CH_3$ | 5-$C_6H_5SO_2$ | (LIII) | Cl | 1 | I |
| D110 | (ΦI) | $C_2H_5$ | $CH_3$ | 5-$C_6H_5SO_2$ | (LIII) | Cl | 1 | $CH_3C_6H_4SO_3$ |
| D111 | (ΦI) | $C_2H_5$ | $CH_3$ | 5-$C_6H_5SO_2$ | (LVI) | Cl | 1 | $BF_4$ |
| D112 | (ΦI) | $C_2H_5$ | $CH_3$ | 5-$C_6H_5SO_2$ | (LVI) | Cl | 1 | $ClO_4$ |
| D113 | (ΦI) | $C_2H_5$ | $CH_3$ | 5-$C_6H_5SO_2$ | (LVI) | Cl | 1 | I |
| D114 | (ΦI) | $C_2H_5$ | $CH_3$ | 5-$C_6H_5SO_2$ | (LVI) | Cl | 1 | $CH_3C_6H_4SO_3$ |
| D115 | (ΦI) | $CH_3$ | $CH_3$ | 5-$C_6H_5SO_2$ | (LVI) | Cl | 1 | $ClO_4$ |
| D116 | (ΦI) | $CH_3$ | $CH_3$ | 5-$C_6H_5SO_2$ | (LVI) | Cl | 1 | I |
| D117 | (ΦI) | n-$C_4H_9$ | $CH_3$ | 5-$C_6H_5SO_2$ | (LVI) | Cl | 1 | $ClO_4$ |
| D118 | (ΦI) | n-$C_6H_{13}$ | $CH_3$ | 5-$C_6H_5SO_2$ | (LVI) | Cl | 1 | $ClO_4$ |
| D119 | (ΦI) | { $(CH_2)_4SO_3^-$<br>$(CH_2)_4SO_3H$ | $CH_3$ | 5-$C_6H_5SO_2$ | (LVI) | Cl | 1 | — |
| D120 | (ΦI) | $C_2H_5$ | $CH_3$ | 5-$C_6H_5SO_2$ | (LVI) | $N^-{=}C{=}C{-}CN$ (with a bond line drawn down from the last C) | 1 | — |
| D121 | (ΦI) | $CH_3$ | $CH_3$ | 5-$C_6H_5SO_2$ | (LVI) | $N^-{=}C{=}C{-}CN$ (with a bond line drawn down from the last C) | 1 | — |

| Dye No | Φ, Ψ | $R_1$, $R_1'$ | $R_2$, $R_3$ | $R_4$ | L | Y | l | X |
|---|---|---|---|---|---|---|---|---|
| D122 | (ΦI) | $C_2H_5$ | $CH_3$ | 5-$C_6H_5CO$ | (LIII) | Cl | 1 | I |
| D123 | (ΦI) | $C_2H_5$ | $CH_3$ | 5-$C_6H_5CO$ | (LIII) | Br | 1 | I |
| D124 | (ΦI) | $C_2H_5$ | $CH_3$ | 5-$C_6H_5CO$ | (LIII) | Cl | 1 | $ClO_4$ |
| D125 | (ΦI) | $C_2H_5$ | $CH_3$ | 5-$C_6H_5CO$ | (LIII) | Cl | 1 | $CH_3C_6H_4SO_3$ |
| D126 | (ΦI) | $C_2H_5$ | $CH_3$ | 5-$C_6H_5CO$ | (LVI) | Cl | 1 | $ClO_4$ |
| D127 | (ΦI) | $C_2H_5$ | $CH_3$ | 5-$C_6H_5CO$ | (LVI) | Cl | 1 | I |
| D128 | (ΦI) | $C_2H_5$ | $CH_3$ | 5-$C_6H_5CO$ | (LVI) | Cl | 1 | $CH_3C_6H_4SO_3$ |
| D129 | (ΦI)<br>(ΦXVI) | { $CH_2{=}CHCH_2$<br>$CH_2{=}CHCH_2$<br>$CH_2{=}CHCH_2$ | $CH_3$ | 5-$C_6H_5CO$-ΦI | (LVIII) | H | | $CH_3C_6H_4SO_3$ |
| D130 | (ΦXVI) | $CH_2{=}CHCH_2$ | — | — | (LVIII) | H | | $CH_3C_6H_4SO_3$ |
| D131 | (ΦXVI) | $CH_2{=}CHCH_2$ | — | 5-Cl | (LVIII) | H | | $CH_3C_6H_4SO_3$ |
| D132 | (ΦXVI) | $CH_2{=}CHCH_2$ | — | 5-$C_6H_5SO_2$ | (LVIII) | H | | $CH_3C_6H_4SO_3$ |
| D133 | (ΦXVI) | $CH_2{=}CHCH_2$ | — | 5-$C_6H_5CO$ | (LVIII) | H | | $ClO_4$ |
| D134 | (ΦXVI) | $CH_2{=}CHCH_2$ | — | { 5—$NO_2$<br>6—Cl | (LVIII) | H | | $CH_3C_6H_4SO_3$ |
| D135 | (ΦXVI) | { $CH_2OCH_3$<br>$(CH_2)_3N(CH_3)_2$ | — | { 5-$C_6H_5SO_2$<br>6-$NO_2$ | (LVIII) | H | | $ClO_4$ |
| D136 | (ΦXVI) | $C_6H_5$ | — | 5-$C_6H_5SO_2$ | (LVIII) | H | | $CH_3C_6H_4SO_3$ |

| Dye No | Φ, Ψ | $R_1$, $R_1'$ | $R_2$, $R_3$ | $R_4$ | L | Y | I | X |
|---|---|---|---|---|---|---|---|---|
| D137 | (ΦXVI) | $C_2H_4OCH_3$ | — | 5—$NO_2$ | (LVIII) | H | | $CH_3C_6H_4SO_3$ |
| D138 | (ΦXVI) | $CH_2{=}CHCH_2$ | — | 5—$NO_2$ | (LVIII) | H | | $ClO_4$ |
| D139 | (ΦXVI) | $C_2H_4OCH_8$ | — | 5—$C_8H_5SO_2$ | (LVII) | H | | $CH_3C_6H_4SO_3$ |
| D140 | (ΦXVI) | $C_2H_4OCH_3$ | — | 5—$C_6H_5SO_2$ | (LVII) | H | | $ClO_4$ |
| D141 | (ΦXVI) | $CH_2{=}CHCH_2$ | — | $NO_2$ | (LVII) | H | | $ClO_4$ |
| D142 | (ΦI) | $CH_3$ | $CH_3$ | $CH_3CO$ | (LII) | H | | $ClO_4$ |
| D143 | (ΦI) | $CH_3$ | $CH_3$ | $CH_3CO$ | (LII) | H | | I |
| D144 | (ΦI) | $C_2H_4OCOCH_3$ | $CH_3$ | $CH_3CO$ | (LII) | H | | I |
| D145 | (ΦVI)<br>(ΦXVI) | { ΦVI — $C_2H_5$<br>{ ΦXVI — $C_2H_4COCH_3$ | — | { 5—$NO_2$—ΦVI<br>{ 5—$C_2H_5CO$—ΦXVI | (LVII) | H | | I |
| D146 | (ΦVI)<br>(ΦXVI) | { ΦVI—$C_2H_5$<br>{ ΦXVI$(CH_2)_4SO_3^-$ | — | { 5—$NO_2$—ΦVI<br>{ 5—$C_6H_5SO_2$—ΦXVI | (LVIII) | H | | — |

| Dye No | Φ, Ψ | $R_1$, $R_1'$ | $R_2$, $R_3$ | $R_4$ | L | Y | l | X |
|---|---|---|---|---|---|---|---|---|
| D147 | (ΦI) | $CH_3$ | $CH_3$, $C_2H_5$ | H | LII | H | — | $ClO_4^-$ |
| D148 | (ΦI) | $CH_3$ | $CH_3$ | 5-Cl | LII | H | — | $ClO_4^-$ |
| D149 | (ΦI) | $CH_3$ | $CH_3$ | 5,6-Cl | LII | H | — | $ClO_4^-$ |
| D150 | (ΦI) | $CH_3$ | $CH_3$ | 5-$OC_2H_5$ | LII | H | — | $ClO_4^-$ |
| D151 | (ΦI) | $CH_3$ | $CH_3$ | 5-$CH_3CONH$ | LII | H | — | $ClO_4^-$ |
| D152 | (ΦI) | $CH_3$ | $CH_3$ | 5,7-Cl | LII | H | — | $ClO_4^-$ |
| D153 | (ΦI) | $CH_3$ | $CH_3$ | 5,5-$C_2H_5OOC$ | LII | H | — | $ClO_4^-$ |
| D154 | (ΦI) | $CH_3$ | $CH_3$ | 5,7-$CH_3O_2S$ | LII | H | — | $ClO_4^-$ |
| D155 | (ΦI) | $CH_3$ | $CH_3$ | 5,7-$CH_3$ | LII | H | — | $ClO_4^-$ |
| D156 | (ΦI) | $CH_3$ | $CH_3$ | 5,7-$CH_3CONH$ | LII | H | — | $ClO_4^-$ |
| D157 | (ΦI) | $CH_3$ | $CH_3$ | 6-$CH_3CONH$ | LII | H | — | $ClO_4^-$ |

These dyes indolenine type cyanine can easily be synthesized by the method described in "Great Organic Chemistry; Nitrogen-containing Heterocyclic Compounds I, (Asakura Shoten) p. 432, with necessary modifications.

A corresponding $\Phi'$—$CH_3$ (wherein $\Phi'$ stands for a ring corresponding to the aforementioned $\Phi$) is heated together with excess $R_1I$ (wherein $R_1$ stands for an alkyl group or aryl group) to introduce $R_1$ to the nitrogen atom in the $\Phi'$ and produce $\Phi$—$CH_3I^-$. Alternatively the indolenine derivatives can be obtained from acetylene alcohol by a method of Fisher's method or Harald's method (Synthesis, 958, 1981). Then, they are subjected to dehydration condensation using an unsaturated dialdehyde or unsaturated hydroxyaldehyde and an alkali catalyst. Alternatively pyridine ring is opened to obtain glutacon aldehyde by Zinck reaction, and it is reacted with a quaternary salt of indolenine derivative to obtain tricarbcyanine.

Generally, such a dye is contained in the form of a monomer in the recording medium. Optionally, however, it may be contained in the form of a polymer therein.

In this case, the polymer possesses at least two molecules of the dye and may be a condensate of such dyes.

For example, the polymer may be a condensate or copolycondensate of the aforementioned dye possessing at least one of at least one species of functional group selected from among —OH, —COOH, —$SO_3H$, etc.

It may be otherwise a copolycondensate of the aforementioned condensate or copolycondensate with copolycondensation component or other dye such as a dialcohol, a dicarboxylic acid or a chloride thereof, a diamine, a di- or triisocyanate, a diepoxy compound, an acid anhydride, a dihydrazide, or diiminocarbonate.

Alternatively, it may be what is obtained by cross-linking a dye possessing the aforementioned functional group either independently or in conjunction with a spacer component or other dye by the use of a metal-containing crosslinking agent.

Examples of the meta-containing crosslinking agent advantageously usable herein include alkoxides of aluminium, etc. (such as those having β-diketone, ketoester, hydroxycarboxylic acid or ester thereof, ketoalcohol, amionoalcohol or enolic acitive hydrogen compound as a ligand), and acylates of titanium, zirconium, alcohol, etc.

Further, the product obtained by binding at least one dye possessing at least one member selected from the class consisting of —OH group, —OCOR group and —COOR group, wherein R stands for a substituted or unsubstituted alkyl group or aryl group with —COO— group through trans-esterification thereof with a spacer or other dye is also usuble.

In this case, the transesterification is desired to be carried out in the presence of an alkoxide of titanium, zirconium, aluminium, etc. as a catalyst.

Moreover, the aforementioned dye may be in a form combined with resin.

In this case, the resin so used is required to possess a prescribed group. Similarly to the polymer described above, the dye is bound to the side chain of the resin by condensation reaction, transesterification, or crosslinking, optionally through the medium of a spacer component.

Further, the recording layer may incorporate resin therein.

In this case, an autoxidizable resin, decomposable resin, or thermoplastic resin is advantageously used.

Concrete examples of the resin usable particularly advantageously herein are as follows.

(i) Polyolefins

Polyethylene, polypropylene and poly-4-methylpentene-1.

ii) Polyolefin copolymers

Ethylene-vinyl acetate copolymer, ethylene acrylate copolymers, ethylene-acrylic acid copolymer, ethylene-propylene copolymer, ethylene-butene-1 copolymer, ethylene-maleic anhydride copolymer, and ethylene-propylene terpolymer (EPT).

The polymerizing ratios of comonomers in such copolymers are optional.

iii) Vinyl chloride copolymers

Vinyl acetate-vinyl chloride copolymer, vinyl chloride-vinylidene chloride copolymer, vinyl chloridemaleic anhydride copolymer, copolymers of acrylic esters or methacrylic esters with vinyl chloride, acrylonitrile-vinyl chloride copolymer, vinyl chloride-vinyl ether copolymer, ethylene- or propylene-vinyl chloride copolymer and ethylenevinyl acetate copolymer having vinyl chloride graft polymerized thereto.

In this case, the polymerizing ratios of comonomers in such copolymers are optional.

iv) vinylidene chloride copolymers

Vinylidene chloride-vinyl chloride copolymer, vinylidene chloride-vinyl chloride-acrylonitrile copolymer and vinylidene chloride-butadiene-vinyl halide copolymer.

In this case, the polymerizing ratios of comonomers in such copolymers are optional.

v) Polystyrene

vi) Styrene copolymers

Styrene-acrylonitrile copolymer (AS resin), styrene-acrylonitrile-butadiene copolymer (ABS resin), styrene-maleic anhydride copolymer (SMA resin), styreneacrylic ester-acrylamide copolymers, styrenebutadiene copolymer (SBR), styrene-vinylidene chloride copolymer and styrene-methyl methacrylate copolymer.

In this case, the polymerizing ratios comonomers in such copolymers are optional.

vii) Styrenic polymers

α-Methylstyrene, p-methylstyrene, 2,5-dichlorostyrene, α,β-vinyl naphthalene, α-vinyl pyridine, acenaphthene and vinyl anthracene, and copolymers thereof such as, for example, copolymer of α-methylstyrene with methacrylic ester.

viii) Cumarone-indene resin

Cumarone-indene-styrene copolymer.

ix) Terpene resin or picolite

Terpene resin which is the polymer of limonene derived from α-pinene and picolite derived from β-pinene.

x) Acrylic resin

Particularly acrylic resin of the type containing an atomic group represented by the following formula proves desirable.

Formula

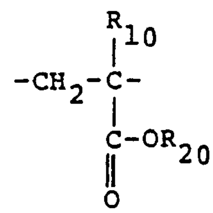

In the formula given above, $R_{10}$ stands for hydrogen atom or an alkyl group having 1 to 4 carbon atoms and $R_{20}$ for a substituted or unsubstituted alkyl group having 1 to 8 carbon atoms in the alkyl moiety. In this case, $R_{10}$ of the foregoing formula is desired to be hydrogen atom or a lower alkyl group having 1 to 4 carbon atoms. Preferably $R_{10}$ is a hydrogen atom or methyl group. $R_{20}$ may be a substituted or unsubstituted alkyl group and the number of carbon atoms in the alkyl moiety is desired to fall in the range of 1 to 8. when $R_{20}$ is a substituted alkyl group, the substituent thereof is desired to be hydroxyl group, halogen atom or an amino group (particularly a dialkylamino group).

The atomic group represented by the foregoing formula may form a copolymer with other repeating atomic group to give rise to a varying acrylic resin. Generally, however, the acrylic resin is formed by obtaining a homopolymer or copolymer using at least one atomic group of the aforementioned formula as a repeating unit.

xi) Polyacrylonitrile

xii) Acrylonitrile copolymers

Acrylonitrile-vinyl acetate copolymer, acrylonitrile-vinyl chloride copolymer, acrylontrile-styrene copolymer, acrylonitrile-vinylidene chloride copolymer, acrylonitrile-vinyl pyridine copolymer, acrylonitrile-methyl methacrylate copolymer, acrylonitrile-butadiene copolymer and acrylonitrile-butyl acrylate copolymer.

In this case, the polymerizing ratios of comonomers in these copolymers are optional.

xiii) Diacetone acrylamide polymers

Diactone acrylamide polymer obtained by the acetion of acetone upon acrylonitrile.

xiv) Polyvinyl acetate

xv) Vinyl acetate copolymers

Copolymers of vinyl acetate with acrylic esters, vinyl ether, ethylene and vinyl chloride.

In this case, the polymerizing ratios of comonomers in these copolymers are optional.

xvi) Polyvinyl ethers

Polyvinyl methyl ether, polyvinyl ether ether and polyvinyl butyl ether.

xvii) Polyamides

Ordinary homonylons such as nylon 6, nylon 6-6, nylon 6-10, nylon 6-12, nylon 9, nylon 11, nylon 12,

and nylon 13, polymers such as nylon 6/6-6/10, nylon 6/6-6/12, and nylon 6-6-6/11, and optionally modified nylons.

xviii) Polyesters

Condensates and copolycondensates of various dibasic acids such as aliphatic dibasic acids like oxalic acid, succinic acid, maleic acid, adipic acid and sebatic acid, and aromatic dibasic acids like isophthalic acid and terphthalic acid with various glycols such as ethylene glycol, propylene glycol, diethylene glycol, tetramethylene glycol and hexamethylene glycol.

Among other condensates and copolycondensates, condensates of aliphatic dibasic acids with glycols and copolycondensates of glycols with aliphatic dibasic acids prove particularly advantageous.

Further, modified Glyptal resins obtained by causing Glyptal resin, a condensate of phthalic anhydride with glycerol, to be esterified with a fatty acid and natural resin are advantageously usable.

xix) Polyvinyl acetate type resins

Polyvinyl formal and polyvinyl acetal type resins obtained by acetalizing polyvinyl alcohols are advantageously usable.

In this case, the acetalizing degrees of polyvinyl acetal type resins are optional.

xx) Polyurethane resins

Thermoplastic polyurethane resins possessing urethane bond.

Among other polyurethane resins, those obtained by the condensation of glycols with diisocyanates and preferably those obtained by the condensation of alkylene glycols with alkylene diisocyanates prove advantageously usable.

xxi) Polyethers

Styrene formalin resin, ring-opened polymer of cyclic acetal, polyethylene oxide and glycol, polypropylene oxide and glycol, propylene oxide-ethylene oxide copolymer and polyphenylene oxide.

xxii) Cellulose derivatives

Nitrocellulose, acetyl cellulose, ethyl cellulose, acetyl-butyl cellulose, hydroxyethel cellulose, hydroxypropyl cellulose, methyl cellulose, ethyl hydroxyethylcellulose, various esters and ethers of cellulose and mixtures thereof.

xxiii) Polycarbonates

Various polycarbonates such as polydioxy-diphenyl methane carbonate and dioxy-diphenyl propane carbonate.

xxiv) Ionomers

Na, Li, Zn and Mg salts of copolymers of methacrylic acid and acrylic acid with ethylene.

xxv) Ketone resins

Condensates of cyclic ketones such as cyclohexanone and acetophenone with formaldehyde.

xxvi) Xylene resins

Condensates of m-xylene and mesitylene respectively of formalin and modified products of such condensates.

xxvii) Petroleum resins

$C_5$ type, $C_9$ type and $C_5$—$C_9$ type copolymers, dicyclopentadiene type resins and copolymers thereof, and modified products of such copolymers.

xxviii) Blends of two or more members selected from the foregoing classes i) through xxvii) and blends of such members with other thermoplastic resins.

The molecular weight and other factors of the autoxidiable resins and thermoplastic resins mentioned above may be varied widely.

Such a resin and the aforementioned dye are generally used in a suitable weight ratio falling in the range of 1:0.1 to 1:100 in the production of the recording layer.

The recording layer containing the resin and the dye is required to contain a quencher represented by the aforementioned general formula I.

Owing to the incorporation of the quencher, the regenerative deterioration of the S/N due to the repeated exposure to the reading light is curbed. When the optical recording medium is stored in a bright room, the resistance of the recording layer to the light is also enhanced by the incorporation of the quencher.

In the aforementioned general formula I, the symbol M stands for a transition metal atom. This transition metal is required to be one member selected from among Ni, Co, Cu, Pd and Pt. Ni is the best choice.

In the same general formula, $R^1$ and $R^2$ may denote similar or dissimilar substituents. They are each a substituted or unsubstituted alkyl group having 1 to 8 carbon atoms or aryl group having 6 to 10 carbon atoms.

In the case of the substituted group, examples of the substituent which proves advantageous include halogens, cyano group, hydroxy group, alkyl group, aryl group, alkoxy group, aryloxy group, alkoxycarbonyl group, aryloxycarbonyl group, acryl group, acryl-amino group, alkyl-amino group, anylinoı carbamoyl group, sulfamoyl group, and sulfonyl group.

In the groups enumerated above, $R^1$ and $R^2$ are particularly desired each to be an unsubstituted alkyl group having 1 to 17, more desirably 1 to 8, and most desirably 1 to 5 carbon atoms. They are desired to denote one and the same unsubstituted alkyl of the foregoing description.

The 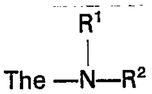

groups possessing such $R^1$ and $R^2$ are desired to be bound to the 3 position of each of the benzene rings (as shown below).

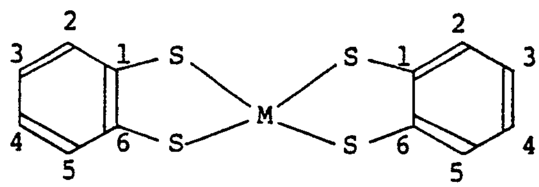

$R^3$ stands for an alkyl group, a halogen atom or

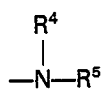 group.

In this case, the alkyl group may be in a substituted form or an unsubstituted form.

Examples of the substituted group in this case include halogen atoms, cyano group, hydroxy group, alkyl group, aryl group, alkoxy group, aryloxy group, alkoxycarbonyl group, aryloxycarbonyl group, acyl group, acyl-amino group, alkyl-amino group, anilino group, carbamoyl group, sulfamoyl group, sulfonyl-amino group and sulfonyl group.

The alkyl group in this case is desired to be an unsubstituted alkyl group having 1 to 17, more desirably 1 to 8, and most desirably 1 to 5 carbon atoms.

The halogen atom may be bromine, chlorine, iodine, etc.

Then, in the

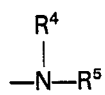

group, $R^4$ and $R^5$ may stand for similar or dissimilar substituents. They are each a substituted or unsubstituted alkyl group or aryl group.

Examples of the substituent in the substituted group include halogen atoms, cyano group, hydroxy group, alkyl group, aryl group, alkoxy group, aryloxy group, alkoxycarbonyl group, aryloxycarbonyl group, acyl group, acyl-amino group, alkyl-amino group, anilino group, carbamoyl group, sulfamoyl group, sulfonyl-amino group and sulfonyl group.

In the substituents enumerated above, $R^4$ and $R^5$ are each desired to be an unsubstituted alkyl group having 1 to 17, more desirably 1 to 8, and most desirably 1 to 5, carbon atoms. They may stand for one same alkyl group.

Then, the symbol n stands for an integer of the value of 1 to 3. It is desired particularly to stand for 1.

When n is 1 and the only $R^3$ is bound to benzene rings, it is desired to be bound to the 4 position in each of the benzene rings (see the aforementioned formula).

The desirable condition possible in this case is that n is 1 and the only $R^3$ is unsubstituted alkyl group, or that both $R^4$ and $R^5$ in the

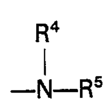

group are unsubstituted alkyl groups.

Optionally where n ≧ 2, the plurality of $R^3$'s bound to one benzene ring may stand for dissimilar substituents.

The compound represented by the general formula I may be used in its unaltered form as a quencher.

Otherwise, it may be used in the form of a salt. Specifically, it may be used in the form of a salt as combined with a cation. In this form, the compound enjoys enhanced solubility and miscibility and enables the medium to acquire improved stability and storage life. The cation to be used for the formation of this salt is a monovalent cation or a cation of higher valency.

Examples of the monovalent cation usable herein include such alkali metal ions as $Li^+$, $Na^+$ and $K^+$, $NH_4^+$, and onium ions. Examples of such onium ions are alkyl groups such as methyl group, ethyl group, n-butyl group, isoamyl group, n-dodecyl group and n-octadecyl group which may be substituted with cyano group, alkyl group, aryl group, alkoxy group, aryloxy group, alkoxycarbonyl group, aryloxycarbonyl group, acyl group, acyl-amino group, carbamoyl group, alkylsulfonyl-amino group, sulfamoyl group and sulfonyl group as well as quaternary ammonium ions, quaternary phosphonium ions, and tertiary sulfonium ions possessing such aryl groups as phenyl group, tolyl group and naphthyl group.

Other examples of the monovalent cation are N-alkyl or N,N-dialkyl cyclic quaternary ammonium ions possessing such five-member rings or six-member rings as pyridine, imidazole, pyrrole, 2-pyrroline, pyrrolidine, piperidine, pyrazole, pyrazoline and imidazoline.

Examples of the divalent cation usable herein include $Mg^{++}$, $Ca^{++}$, $Sn^{++}$ and $Ba^{++}$ and bis-ammonium ion and bis-phosphonium ion.

Other examples are cations of valency of 2 or more represented by $B—(N^+R'_3)l$.

In this formula, B stands for a hydrocarbon residue, R' for a substituted or unsubstituted alkyl group or aryl group, and for an integer of the value of 2 or 3.

Among other cations described above, quaternary ammonium ions prove particularly desirable.

Concrete examples of the quaternary ammonium ion include tetraethyl ammonium, tetrabutyl ammonium tetraheptyl ammonium, phenyl-trimethyl ammonium, and octyltriethyl ammonium.

Now, concrete examples of the compound represented by the general formula I will be cited below.

The numerals attached to the groups indicated herein below denote the positions in benzene ring at which relevant substituents are bound (as shown in the aforementioned formula).

| | $—NR^1R^2$ | n | $R^3$ | M | $Cat^+$ |
|---|---|---|---|---|---|
| Q1 | $3-N(CH_3)_2$ | 0 | — | Ni | — |
| Q2 | $3-N(CH_3)_2$ | 0 | — | Ni | $N^+(n-C_4H_9)_4$ |
| Q3 | $3-N(CH_3)_2$ | 1 | $4-N(CH_3)_2$ | Ni | — |
| Q4 | $3-N(CH_3)_2$ | 1 | $4-N(CH_3)_2$ | Ni | $N^+(n-C_4H_9)_4$ |
| Q5 | $3-N(CH_3)_2$ | 1 | $4-CH_3$ | Ni | — |
| Q6 | $3-N(CH_3)_2$ | 1 | $4-CH_3$ | Ni | $N^+(n-C_4H_9)_4$ |
| Q7 | $3-N(CH_3)_2$ | 0 | — | Ni | $N^+(n-C_7H_{15})_4$ |
| Q8 | $3-N(CH_3)_2$ | 1 | $4-N(CH_3)_2$ | Ni | $N^+(n-C_7H_{15})_4$ |
| Q9 | $3-N(C_2H_5)_2$ | 0 | — | Ni | — |
| Q10 | $3-N(C_2H_5)_2$ | 0 | — | Ni | $N^+(n-C_4H_9)_4$ |
| Q11 | $3-N(CH_3)_2$ | 1 | $4-C_2H_5$ | Ni | — |
| Q12 | $3-N(CH_3)_2$ | 1 | $4-C_2H_5$ | Ni | $N^+(n-C_4H_9)_4$ |
| Q13 | $3-N(CH_3)_2$ | 1 | 4-Cl | Ni | — |
| Q14 | $3-N(CH_3)_2$ | 1 | 4-Cl | Ni | $N^+(n-C_4H_9)_4$ |
| Q15 | $3-N(CH_3)_2$ | 0 | — | Ni | $N^+(n-C_2H_5)_4$ |
| Q16 | $3-N(CH_3)_2$ | 1 | $4-N(CH_3)_2$ | Ni | $N^+(C_8H_{17})(C_2H_5)_3$ |
| Q17 | $3-N(CH_3)_2$ | 1 | $4-CH_3$ | Ni | $N^+(C_6H_5)(CH_3)_3$ |

The compounds represented by the general formula I can be synthesized by faithfully following, or following with necessary modifications, the procedure disclosed by Iwao Tabushi (Engineering Faculty, Kyoto University) at the 47th Spring Annual Meeting (April 3, 1983), 3T49, of Japan Chemical Society.

To be specific, such a compound is synthesized by the reaction of a compound represented by the general formula III:

General formula III

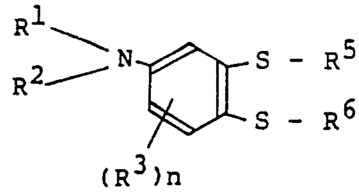

wherein $R^1$, $R^2$ and $R^3$ are as defined previously and $R^5$ and $R^6$ each stand for hydrogen atom, a lower alkyl group having 1 to 8 carbon atoms, benzyl group or phenetyl group, with a halide of M (wherein M is as defined previously).

Concrete examples of the compound of the general formula III usable herein include 3,4 - bis - n - butylthio - N,N - dimethyl aniline, 1,2 - bis - (N,N - dimethylamino) - 4,5 - bis - (n - butylthio) - benzene, 4,5 - bis - propylthio - N,N,2 - trimethyl aniline, 4,5 - bis - propylthio - 2 - ethyl - N,N - dimethyl aniline, 4,5 - bis - butylthio - N,N,2 - trimethyl aniline and 4,5 - bis - butylthio - 2 - methyl - N,N - diethyl aniline.

Concrete examples of the metal halide are nickel chloride, nickel bromide and nickel iodide.

The synthesis is effected, for example, by causing a compound of the general formula III having alkyl groups as the substituents $R^5$ and $R^6$ to react in liquid ammonia with a metallic alkali, then removing the liquid ammonia from the reaction mixture, and stirring the remaining reaction mixture with a lower alcohol solution of an alkali metal hydroxide and a nickel halide added thereto.

In the case of a compound of the general formula III having hydrogen atoms as the substituents $R^5$ and $R^6$, the synthesis is effected satisfactorily by causing this compound to react with a nickel halide, for example, in a lower alcohol solution of an alkali metal hydroxide.

Concrete examples of the metal alkali used advantageously herein are sodium, potassium and lithium. Concrete examples of the alkali metal hydroxide are sodium hydroxide and potassium hydroxide. Examples of the lower alcohol are methanol, ethanol and propanol.

Formation of the salt of a compound represented by the general formula I is accomplished by the reaction of this compound with a cation-containing compound such as quaternary ammonium halide.

Examples of the quaternary ammonium halide which prove particularly advantageous herein include tetraethyl ammonium bromide, tetrabutyl ammonium bromide, tetraheptyl ammonium bromide, phenyltrimethyl ammonium bromide and octyltriethyl bromide.

Now, typical examples of synthesis will be cited below.

Synthesis 1 (synthesis of Q2):

In 50 ml of liquid ammonia, 3 g (12.7 m.mols) of 3,4 - bis - n - butylthio - N,N - dimethyl aniline was placed and 1 g (43.5 m.mols) of sodium was added until disappearance of a blue colour. Then, 3.7 g (69.2 m.mols) of ammonium chloride was added for removal of residual liquid ammonium. Subsequently, 60 ml of ethanol solution containing 1.6 g (28.6 m.mols) of potassium hydroxide, 33 ml of ethanol solution containing 0.79 g (6.1 m.mols) of nickel chloride, and 3 ml of ethanol solution containing 2 g (6.2 m.mols) of tetra-n-butyl ammonium bromide were added thereto.

The resultant mixture was left reacting at room temperature for 10 hours under stirring. The precipitate consequently formed was separated by filtration, washed with ether, and recrystallized from methylene chloride-ethanol to produce bis - (4 - dimethylamino - 1,2 - benzenethiolene) - nickel - tetra - n - butyl ammonium (Q2).

Yield of product obtained 1.2 g, m.p. 172.5° to 173°C, and IR absorption spectrum ($cm^{-1}$): 2840 (C—H), 1560 (benzene), 1325, 1230, 1170, 1080 and 1010.

Synthesis 2 (synthesis of Q4):

In 5 ml of liquid ammonia, 0.1 g (0.294 m.mol) of 1,2 - bis - (N,N - dimethylamino) - 4,5 - bis - (n - butylthio) - benzene was placed and 24 mg (1.04 m.mols) of sodium was added until disappearance of a blue colour. Then, 88 g (1.64 m.mols) of ammonium chloride was added to the resultant reaction mixture to effect removal of residual liquid ammonia. Subsequently, 10 ml of ethanol solution containing 33 mg (0.588 m.mol) of potassium hydroxide and 10 ml of ethanol solution containing 19 mg (0.147 m.mol) of nickel chloride were added therto. Further, 5 ml of ethanol solution containing 48 mg (0.147 m.mol) of tetra-b-butyl bromide was added thereto.

The resultant mixture was left reacting at room temperature for about one day under stirring. The precipitate consequently formed was separated by filtration, washed with ether and recrystallized from

methylene chloride-ethanol to produce bis - (4,5 - bis - dimethylamino - 1,2 - benzenedithiolene) - nickel - tetra - n - butyl ammonium (Q4).

Amount of product obtained 50 mg, IR spectrum ($cm^{-1}$): 2920, 2800, 2770, 1550, 1470, 1440, 1310, 1160, 1130, 970 and 870.

Synthesis 3 (synthesis of Q6):

To 24 g of 4-bromo-2-methyl aniline and 25 ml of water, 17 g of dimethyl sulfate and 30 ml of 25% potassium hydroxide were alternately added piecemeal in a total of three cycles. The resultant mixture was left reacting at room temperature for three hours. The reaction mixture was extracted from ether and then distilled to expel ether. The residue of the distillation was distilled under a vacuum to produce 4-bromo-2,N,N-trimethyl aniline. Then, 20 g of 4-bromo-2,N,N-trimethyl aniline, 16.5 g of bromine, 15.6 g of silver sulfate, and 200 ml of sulfuric acid were put together and left reacting at room temperature.

Excess bromine was removed. The reaction mixture which remained was poured into ice and extracted from methylene chloride. The methylene chloride layer was washed with water, dried and distilled to expel methylene chloride. The residue was vacuum distilled to obtain 14.5 g (53%) of 4,5-dibromo-2,N,N-trimethyl aniline having a boiling point of 92° to 93°C/0.1 mmHg. Then, 13 g of 4,5-dibromo-2,N,N-trimethyl aniline, 19 g of n-butylthio-copper mercaptide, 78 ml of quinoline and 26 ml of pyridine were put together and left reacting at 160°C for 11 hours.

The resultant reaction mixture was cooled, poured into ice and hydrochloric acid and extracted from methylene chloride. The extract was washed with water, dried and distilled to expel methylene chloride. The residue was vacuum distilled to obtain 4,5-bis-butylthio-N,N,2-trimethyl aniline. Then, a solution of 6 g of 4,5-bis-butylthio-N,N,2-trimethyl aniline in 30 ml of ether was added into 100 ml of liquid ammonia. To the resultant mixture, 1.9 g of sodium was added piecemeal. Then, 5.7 g of ammonium chloride was added to effect removal of ammonia. A solution of 2.2 g of potassium hydroxide in 91 ml of ethanol and a solution of 1.2 g nickel chloride in 54 ml of ethanol were added. The resultant mixture was stirred at room temperature for 45 minutes. Subsequently, a solution of 3.1 g of tetra-n-butyl ammonium bromide in 18 ml of ethanol was added thereto and the mixture was stirred at room temperature for 10 hours.

The precipitate which consequently educed in the reaction mixture was separated by filtration and dissolved in methylene chloride. The crystals which were formed in the solution by addition of a small amount of ethanol were separated by filtration. Consequently, there was obtained 2.6 g (38.7%) of bis - (4 - dimethylamino - 5 - methyl - 1,2 - benzenedithiolate) - nickel - tetra - n - butyl ammonium having a boiling point of 188° to 189°C.

IR ($cm^{-1}$) — 2920, 1570, 1500, 1470, 1400, 1280, 1200, 1130, 1090, 980, 870, 730 and 460.

Elementary analysis (for $C_{34}H_{58}N_3NiS_4$)

Found — C: 58.69, H: 8.40, N: 6.04

Calculated — C: 58.46, H: 8.60, N: 6.07.

The absorption characteristic of this compound in the near infrared region was 990 nm max. ($\varepsilon$ = 17400).

The quencher represented by the general formula I is contained in an amount of 0.01 to 12 mols, preferably 0.1 to 1.2 mols, per mol of the dye. The maximum absorption wavelength of the quencher is desired to exceed the maximum absorption wavelength of the dye to be used. In consequence of the incorporation of this quencher, the deterioration by reading of the recording medium is decreased to a great extent. In this case, the difference between the two maximum absorption wavelengths is desired to be 0 or not to exceed 350 nm.

The formation of the recording layer in the recording medium is generally accomplished by applying the prepared composition to the substrate by any of the known methods.

The thickness of the recording layer so formed is generally in the range of 0.03 to 10 um.

Optionally, the recording layer contemplated by the present invention may additionally incorporate therein other dye, other polymer or oligomer, various plasticizer, surfactant, antistatic agent, lubricant, flame retardant, stabilizer, dispersant, antioxidant and crosslinking agent.

This formation of the recording layer can be carried out by spreading a mixture containing a dye and a quencher or a mixture containing a dye, a quencher and resin on a substrate by the use of a prescribed solvent and subsequently drying the applied layer of this mixture.

Examples of the solvent usable advantageously for the formation of the recording layer include ketones such as methylethyl ketone, methyl-isobutyl ketone and cyclohexanone, esters such as butyl acetate, ethyl acetate, carbitol acetate and butyl-carbitol acetate, ethers such as methyl cellosolve and ethyl cellosolve, aromatic solvents such as toluene and xylene, halogenated alkyl compounds such as dichloroethane and alcohols.

The dye is generally used in an amount falling in the range of 50 to 100% by weight, preferably 80 to 100% by weight, based on the weight of the resin to be used.

As concerns the substrate on which the recording layer is deposited, this invention does not discriminate this substrate by its material. Examples of the substrate usable advantageously herein include various resins, glass, ceramics and metals.

The shape of the substrate is selected to suit the purpose for which the produced recording medium is used. Thus, the substrate may be in the shape of tape, drum or belt, for example.

The substrate is generally provided with a groove for tracking. Optionally, it may possess an undercoat layer such as a reflecting layer, and a heat-storing layer and a light-absorbing layer.

When the substrate is made of a resinous material, the resin may be methacrylic resin, acrylic resin, epoxy resin, polycarbonate resin, polysulfon resin, polyether sulfon or methyl pentene polymer. To fulfil its function, the resinous substrate may or may not be provided with grooves.

The substrate may be coated with primer for the purpose of acquiring enhanced solvent resistance, wettability, surface tension and thermal conductivity.

Examples of the primer usable advantageously herein include titanium type, silane type and aluminium type alkoxides, chelated products, and various photosensitive resins.

The recording layer, when necessary, may be coated with a reflecting layer serving as a rear surface when the substrate is made of transparent material or with a surface-protecting layer or half-mirror layer.

The optical recording medium of this invention may have the aforementioned recording medium deposited on one surface thereof or one each on both the opposite surfaces thereof. Alternatively, two substrates each having one recording medium deposited on one side thereof may be opposed to each other across a prescribed space, with the recording layers confronting each other, and sealed in situ airtightly enough to keep the recording layers from dirt and scratches.

The optical recording medium of this invention, while in straight or rotary motion, admits the recording light in pulses. On exposure to the incoming recording light, the dye in the recording layer generates heat and melts itself and the resin to give rise to bits in the recording layer.

The reading of the bits thus formed is effected by keeping the optical recording medium in straight or rotary motion, projecting the reading light upon the recording layer containing these bits, and detecting the light reflected light.

In this case, the recording and reading of information may be performed on the substrate side or on the recording layer side of the medium. Purely by reason of the structure of the medium, this invention prefers the recording and reading of information to be carried out on the substrate side of the medium.

The bits once incised in the recording medium can be erased with light or heat so that the recording medium is readied for repeated use.

As the light for recording or reading, there may be used semiconductor laser, He-Ne laser, Ar laser or He-Cd laser.

The optical recording medium produced by the present invention suffers from the regenerative deterioration due to repeated exposure to the reading light only minimally.

It enjoys notably improved stability to withstand light and experiences little degradation of quality while in storage in a bright room.

When bits are alternately formed and erased, the properties of the medium are affected only to the minimal extent. Moreover, the sensitivity of writing is degraded sparingly.

It has previously been proposed to use a compound of the aforementioned general formula I minus the di-substituted amino group as a quencher for production of an optical recording medium entailing sparing deterioration by reading. The quencher of the present invention is effective in conferring upon the optical recording medium still better stability to withstand the deterioration by reading. Moreover, the quencher of this invention exhibits decisively high miscibility with the dye and the resin as compared with the quencher of the former invention. In the applied layer of the recording composition, the quencher is precipitated sparingly. Thus, the recording layer finally formed enjoys outstanding stability and suffers from such adverse phenomena as breedout and crystallization during protracted storage only minimally.

Now, the present invention will be described more specifically below with reference to working examples.

Example 1

Varying dye D, resin R and quencher Q indicated in Table 1 below were dissolved in the proportions indicated in Table 1 in a prescribed solvent. On a substrate injection moulded of polymethyl methacrylate (PMMA) 30 cm in diameter, a coating layer of the hydrolyzate of a titanium chelate product was deposited and the solution prepared above was applied on the coating layer in a thickness of 0.07 μm. Thus, various media were obtained.

In Table 1, NC stands for nitrocellulose having nitrogen content of 11.5 to 12.2% and viscosity of 80 seconds as measured by the method of JIS K—6703. The dyes used herein were those illustrated above in the text as identified by the respective Nos. attached thereto. Similarly, the quenchers used herein were those illustrated above in the text as identified by the respective Nos. attached thereto. In Table 1, the weight ratios of R/D and those of Q/D in the varying compositions prepared herein are also shown.

Each of the media so produced was kept rotated at a rate of 1800 rpm and exposed to the recording light of AlGaAs-GaAs semiconductor laser beam (830 nm) converted to a diameter of 1 μm (condenser output 10 mW) and allowed to impinge in a train of pulses at a prescribed frequency.

On each medium, the pulse width of the writing light was varied to determine the particular pulse width capable of giving a light erasure ratio of 1.4. The reciprocal of the numerical value of this particular pulse width was reported as writing sensitivity. The results are shown in Table 1. In this case, the light erasure ratio means the degree of attenutation at the bits portion of the reflectance on the medium surface of the reading light which is described more fully afterward.

Separately, on each medium, writing was carried out with the pulse width fixed at 100 n.sec.

Thereafter, the medium was exposed to the reading light of semiconductor laser beam (830 nm) 1 mW in power controlled to impinge in pulses of 1 μ.sec in width and 3 KHz in frequency, for determination of the initial S/N ratio between adjacent peaks on the disk surface. After the rotation of the medium was stopped, the reading light was projected on the disk for five minutes. At the end of this projection, the variation (%) in the reflectance from the rear surface side of the medium, namely, the deterioration ratio by reading, was measured.

The results are shown in Table 1.

The quenchers Q1′, Q2′ and Q3′ used herein for comparison are as follows.

Q1′: [2,2′-thiobis-(4-t-octylphenolate)]-n-butylamine nickel (II) (produced by Japan Cyanamid Co., Ltd. and marketed under trademark designation of Cyasorb UV-1084).

Q2′: Nickel-bis-(octylphenyl)-sulfide (produced by Nissan-Ferro Organic Chemical Co., Ltd. and marketed under trademark designation of ferro AM-101).

Q3′: Nickel-bis-(trichlorobenzene-dithiol)tetra-(5-butyl) ammonium (produced by Mitsui-Toatsu Fine Co., Ltd. and marketed under trademark designation of NIR PA-1006;.

In Table 1, DP stands for what was obtained by crosslinking D7 and D105 through the medium of diisopropoxy-bis(acetylacetonate) titanium.

D-R stands for what was obtained by coupling D8 to PMMA (number-average molecular weight 10,000) through esterification.

TABLE 1

| Medium No. | Dye (D) No. | Resin (R) | Quencher (Q) No. | R/D (weight ratio) | Q/D (weight ratio) | Sensitivity (n sec)$^{-1}$ | S/N ratio (dB) | Variation in reflectance (%) |
|---|---|---|---|---|---|---|---|---|
| 1 (Control) | D10 | NC | — | 1/5 | 0 | $8.7 \times 10^{-3}$ | 48 | −50 |
| 2 (Control) | " | " | Q1 | 1/6 | 1/2 | $5.8 \times 10^{-3}$ | 47 | −38 |
| 3 (Control) | " | " | Q2 | " | " | $8.3 \times 10^{-3}$ | 48 | −39 |
| 4 (Control) | " | " | Q3 | " | " | $8.3 \times 10^{-3}$ | 48 | − 3 |
| 5 | " | " | Q1 | " | " | $8.3 \times 10^{-3}$ | 48 | − 2 |
| 6 | " | " | Q2 | " | " | $8.3 \times 10^{-3}$ | 48 | − 2 |
| 7 | " | " | Q4 | " | " | $8.3 \times 10^{-3}$ | 48 | − 2.5 |
| 8 | " | " | Q6 | " | " | $8.3 \times 10^{-3}$ | 48 | − 2.5 |
| 9 | D8 | " | Q2 | " | " | $8.3 \times 10^{-3}$ | 48 | − 2 |
| 10 | D9 | " | Q4 | " | 2/3 | $5.8 \times 10^{-3}$ | 47 | − 3 |
| 11 | D10 | — | Q2 | 0 | 1/2 | $1.0 \times 10^{-2}$ | 49 | − 2 |
| 12 (Control) | D43 | NC | — | 1/5 | 0 | $5.8 \times 10^{-3}$ | 45 | −54 |
| 13 | " | " | Q4 | 1/6 | 1/2 | $5.8 \times 10^{-3}$ | 45 | − 9 |
| 14 | DP | — | Q2 | 0 | " | $8.7 \times 10^{-3}$ | 48 | − 2 |
| 15 | D—R | | Q2 | 0 | 1/3 | $5.8 \times 10^{-3}$ | 46 | − 2 |

The effect of the present invention is evident from the results given in Table 1.

Example 2

The media, Nos. 5—11 and Nos. 13—15, of Example 1 were subjected to exposure to the writing light by the procedure of Example 1. With an infrared heater, they were heated at 150°C for 15 seconds to effect erasure of bits. By this test, they were demonstrated to withstand repeated incision and erasure of bits with satisfactory results.

**Claims**

1. An optical recording medium having superposed on a substrate a recording layer containing at least one dye or a dye and a resin and further containing a quencher, characterised in that the quencher is a compound represented by the following general formula I or a salt thereof:

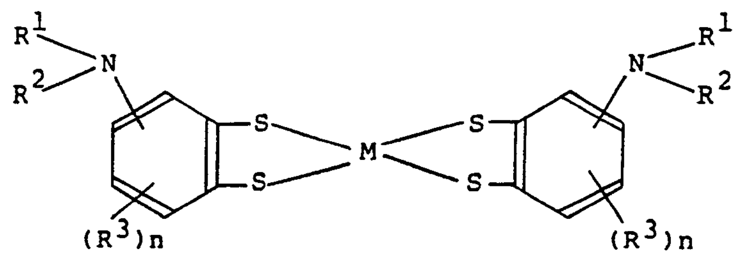

(I)

wherein $R^1$ and $R^2$ each stand for a substituted or unsubstituted alkyl group having 1 to 8 carbon atoms or aryl group having 6 to 10 carbon atoms, $R^3$ stands for an alkyl group having 1 to 4 carbon atoms, a halogen atom or a

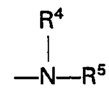

group (wherein $R^4$ and $R^5$ each stand for a substituted or unsubstituted alkyl group having 1 to 8 carbon atoms or aryl group having 6 to 10 carbon atoms), n stands for an integer of the value of 1 to 3 and M stands for a transition metal atom.

2. An optical recording medium as claimed in Claim 1, in which $R^1$ and $R^2$ each stand for an alkyl group.

3. An optical recording medium as claimed in Claim 1 or 2 in which the

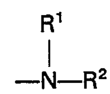

group is bound at the 3-position of the benzene ring.

4. An optical recording medium as claimed in Claim 1, 2 or 3 in which $R^3$ stands for an alkyl group or a

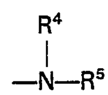

group.

5. An optical recording medium as claimed in Claim 4, in which $R^4$ and $R^5$ each stand for an alkyl group.

6. An optical recording medium as claimed in any one of the preceding claims in which n stands for 1.

7. An optical recording medium as claimed in any one of the preceding claims in which $R^3$ is bound at the 4-position of the benzene ring.

8. An optical recording medium as claimed in any one of the preceding claims in which the dye is a cyanine dye.

9. An optical recording medium as claimed in Claim 8 in which the cyanine dye is a compound represented by the following general formula II

$$\Phi - L = \Psi\,(X^-)m \qquad \text{(II)}$$

wherein Φ and Ψ each stand for an indole ring, a thiazole ring, an oxazole ring, a selenazole ring, an imidazole ring or a pyridine ring which may have condensed therewith an aromatic ring, L stands for a linking group for the formation of a mono-, di-, tri- or tetra-carbocyanine dye, $X^-$ stands for an anion, and m stands for 0 or 1.

10. An optical recording medium as claimed in Claim 9 in which Φ and Ψ each stands for an indole ring which may have an indole ring condensed therewith.

**Patentansprüche**

1. Optisches Aufzeichnungsmaterial mit einer auf einem Substrat aufgebrachten Aufzeichnungsschicht, enthaltend wenigstens einen Farbstoff oder einen Farbstoff und ein Harz und weiter

enthaltend einen Quencher, dadurch gekennzeichnet, daß der Quencher eine Verbindung ist, die durch die folgende allgemeine Formel I dargestellt wird, oder ein Salz von dieser:

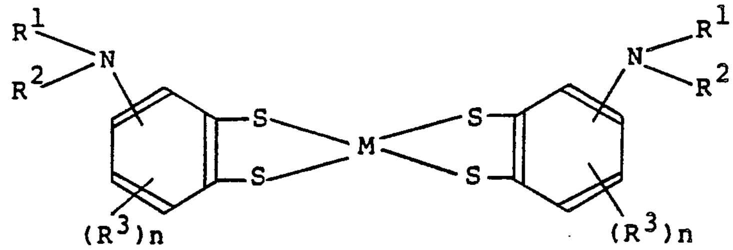

(I)

worin $R^1$ und $R^2$ jeweils eine substituierte oder nicht substituierte Alkylgruppe mit 1 bis 8 Kohlenstoffatomen bedeuten oder eine Arylgruppe mit 6 bis 10 Kohlenstoffatomen, $R^3$ eine Alkylgruppe mit 1 bis 4 Kohlenstoffatomen, ein Halogenatom oder eine

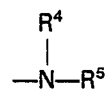

Gruppe bedeuten (worin $R^4$ und $R^5$ jeweils eine substituierte oder nicht substituierte Alkylgruppe mit 1 bis 8 Kohlenstoffatomen oder eine Arylgruppe mit 6 bis 10 Kohlenstoffatomen bedeuten), n eine ganze Zahl des Wertes 1 bis 3 bedeutet und M ein Übergangsmetallatom bedeutet.

2. Optisches Aufzeichnungsmaterial nach Anspruch 1, bei dem $R^1$ und $R^2$ jeweils eine Alkylgruppe bedeuten.

3. Optisches Aufzeichnungsmaterial nach Anspruch 1 oder 2, bei dem die

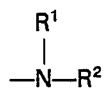

Gruppe in der 3- Position des Benzolringes gebunden ist.

4. Optisches Aufzeichnungsmaterial nach Anspruch 1, 2 oder 3, bei dem $R^3$ eine Alkylgruppe oder eine

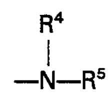

Gruppe bedeutet.

5. Optisches Aufzeichnungsmaterial nach Anspruch 4, bei dem $R^4$ und $R^5$ jeweils eine Alkylgruppe bedeuten.

6. Optisches Aufzeichnungsmaterial nach einem der vorhergehenden Ansprüche, bei dem n die Zahl 1 bedeutet.

7. Optisches Aufzeichnungsmaterial nach einem der vorhergehenden Ansprüche, bei dem $R^3$ in der 4-Position des Benzolringes gebunden ist.

8. Optisches Aufzeichnungsmaterial nach einem der vorhergehenden Ansprüche, bei dem der Farbstoff ein Cyaninfarbstoff ist.

9. Optisches Aufzeichnungsmaterial nach Anspruch 8, bei dem der Cyaninfarbstoff eine Verbindung ist, dargestellt durch die folgende allgemeine Formel II.

$$\Phi - L = \Psi (X^-)m \qquad (II)$$

wobei $\Phi$ und $\Psi$ jeweils beteuten einen Indolring, einen Thiazolring, einen Oxazolring, einen Selenazolring, einen Imidazolring oder einen Pyridinring, womit ein aromatischer Ring kondensiert sein kann, L bedeutet eine Kopplungsgruppe für die Bildung eines Mono-, Di-, Tri- oder Tetra-Carbocyaninfarbstoffes, $X^-$ bedeutet ein Anion und m bedeutet 0 oder 1.

10. Optisches Aufzeichnungsmaterial nach 9, bei dem $\Phi$ und $\Psi$ jeweils einen Indolring bedeuten, mit dem ein Indolring kondensiert ist.

**Revendications**

1. Milieu d'enregistrement optique, comportant, en superposition sur un substrat, une couche d'enregistrement contenant au moins un colorant ou un colorant et une résine, et contenant en outre un

agent d'étouffement ou d'extinction, milieu caractérisé en ce que l'agent d'étouffement ou d'extinction est un composé représenté par la formule générale (I) suivante, ou est un de ses sels:

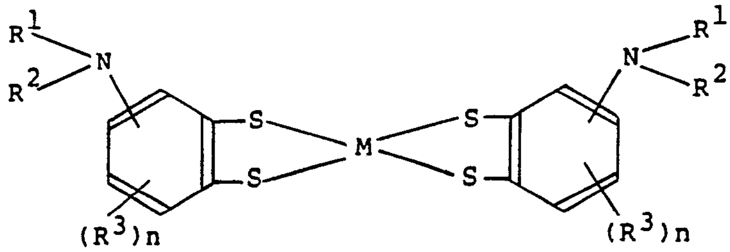

(I)

formule dans laquelle $R^1$ et $R^2$ représentent chacun un groupe alkyle substitué ou non substitué, ayant 1 à 8 atomes de carbone, ou un groupe aryle ayant 6 à 10 atomes de carbone, $R^3$ représente un groupe alkyle ayant 1 à 4 atomes de carbone, un atome d'halogène ou un groupe

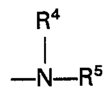

(où $R^4$ et $R^5$ représentent chacun un groupe alkyle, substitué ou non substitué, ayant 1 à 8 atomes de carbone, ou un groupe aryle ayant 6 à 10 atomes de carbone), n représente un nombre entier valant 1 à 3, et M représente un atome de métal de transition.

2. Milieu d'enregistrement optique, tel que représenté à la revendication 1, dans lequel $R^1$ et $R^2$ représentent chacun un groupe alkyle.

3. Milieu d'enregistrement optique, tel que revendiqué à la revendication 1 ou 2, dans lequel le groupe

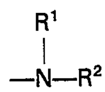

est fixé en position 3 du noyau benzénique.

4. Milieu d'enregistrement optique, tel que revendiqué à la revendication 1, 2 ou 3, dans lequel $R^3$ représente un groupe alkyle ou un groupe

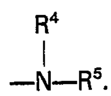

5. Milieu d'enregistrement optique, tel que reventiqué à la revendication 4, dans lequel les symboles $R^4$ et $R^5$ représentent chacun un groupe alkyle.

6. Milieu d'enregistrement optique, tel que revendiqué dans l'une quelconque des revendications précédentes, dans lequel n vaut 1.

7. Milieu d'enregistrement optique, tel que revendiqué dans l'une quelconque des revendications précédentes, dans lequel $R^3$ est fixé en position 4 du noyau benzénique.

8. Milieu d'enregistrement optique, tel que revendiqué dans l'une quelconque des revendications précédentes, dans lequel le colorant est un colorant de la famille de la cyanine.

9. Milieu d'enregistrement optique, tel que revendiqué à la revendication 8, dans lequel le colorant de la famille de la cyanine est un composé représenté par la formule générale II suivante:

$$\Phi - L = \Psi\ (X^-)m \qquad \text{(II)}$$

dans laquelle Φ et Ψ représentent chacun un noyau indole, un noyau thiazole, un noyau oxazole, un noyau sélénazole, un noyau imidazole ou un noyau pyridine, qui peuvent comporter un noyau aromatique condensé, L représente un groupe de liaison pour la formation d'un colorant de type mono-, di-, tri- ou tétra-carbocyanine, $X^-$ représente un anion, et m vaut 0 ou 1.

10. Milieu d'enregistrement optique selon la revendication 9, dans lequel Φ et Ψ représentent chacun un noyau indole, sur lequel un noyau indole peut être condensé.